# EUROPEAN PATENT SPECIFICATION

(11) **EP 1 914 821 B1**
(45) Date of publication and mention of the grant of the patent: **30.12.2009**
(21) Application number: 06778469.4
(22) Date of filing: 27.07.2006
(51) Int. Cl.: H01M 2/12

(54) **SAFETY DEVICE FOR THE HERMETIC SEALING OF ELECTROCHEMICAL CELLS**
SICHERHEITSEINRICHTUNG ZUM HERMETISCHEN ABDICHTEN VON ELEKTROCHEMISCHEN ZELLEN
DISPOSITIF DE SECURITE DESTINE A LA FERMETURE ETANCHE DE CELLULES ELECTROCHIMIQUES

(30) Priority: 27.07.2005 ES 200501838
(43) Date of publication of application: 23.04.2008
(73) Proprietor: CELAYA, EMPARANZA Y GALDOS, S.A. (CEGASA), E-01013 Vitoria (Alava) (ES)
(72) Inventor: ALDAY LESAGA, Francisco Javier, E-01013 Vitoria (Àlava) (ES)
(74) Representative: Barlocci, Anna
(86) International application number: PCT/ES2006/070116
(87) International publication number: WO 2007/012692

(56) References cited:
- WO-A-01/89007
- ES-A6- 2 026 334
- US-A1- 2002 061 434
- US-A1- 2003 157 398
- US-A1- 2004 191 610
- US-B1- 6 270 919
- US-B1- 6 733 917

## Description

### FIELD OF THE INVENTION

This invention relates to a safety device which is intended to prevent possible explosions occurring in electrochemical cells, which are caused by the pressure of the gases produced in the interior of the cells under certain circumstances.

### PRIOR ART

The device according to the invention is particularly designed for its use in electrochemical cells with a general constitution comprising a metallic container closed at one end, in which the active materials which constitute the anode and the cathode are separately contained; the base of the container forms the positive contact and its open end has a plug which is constituted of a set of two cylindrical parts which, from the inside outwards, are a moulded nylon plastic part and a metallic cover which constitutes the negative contact; the plastic part forms a cylindrical core, a likewise cylindrical rising peripheral wall and, between the two, an annular base, wherein the core is pierced axially by a current collector which, inserted into the anode, is in electrical contact with said cover, and wherein adjacent to this core there is outlined a weakened section of material which is breakable in the event of a gas overpressure inside the metallic container; to hold the cover, the peripheral wall of the plastic part is folded inwards, together with the edge of the open end of the metallic container, by means of a pressure exerted on the latter which ensures a hermetic seal of the metallic container; said cover is provided with windows through which the gas is released after breakage of the plastic part due to the pressure of said gas inside the metallic container.

The internal generation of gases in electrochemical cells is common. This may be because the cell has been short-circuited. It may be because in an electrical assembly with four cells, for example, to supply a device, one of said cells may be installed with its polarity inverted; this error may remain concealed because the energy supplied by the other three cells may be sufficient for an apparently correct operation of the device, with the aggravating circumstance that this fourth cell is undergoing a charging process, using the other three as a power source. The production of gas also occurs during storage of the cell or as a consequence of its operation. In all cases, this phenomenon entails a certain real risk of explosion of the cells, entailing the obvious damage to the cells themselves and to the device in which they may be installed.

One method of solving this problem is disclosed in Spanish Patent application no. P9002590, commonly owned with the present application. This document contemplates the existence of a plastic part (denominated sealing disc) which is installed at the open end of the metallic container which contains the anodic and cathodic materials, and which features a safety valve consisting of a circular area defined by a weakening in the thickness of the annular base of the part itself, in such a way that in the event of an excessive internal gas pressure (exceeding a predetermined value) the weakened area will break and the valve will open; this will allow the gas to escape through the windows provided on the metallic cover which, on the exterior of the plastic part, constitutes the final seal of said metallic container and the negative electrical contact of the cell; the potential explosion of the cell is thus avoided.

Another known solution is that of European Patent no. EP 1 192 678 B1, based on US Patent no. US 6,270,919 B1. Here a more complex structure than that of the previous one is presented; it consists in the inclusion of a third part, a disc, also with orifices, and which is assembled trapped between the aforementioned plastic part and the metallic cover of the negative contact.

In both the first and the second of these solutions there exists the problem known as re-sealing, which consists in the fact that the plastic part is distorted by heat, and due to its flexibility, it bulges outwards and blocks the windows for the evacuation of the gas arranged in the metallic cover (in the first solution) or in the intermediate disc (in the second solution), in such a way that even though the weakened section might break, the outlet of gas could become hampered, and explosion of the cell might occur. The internal heating might occur not only due to the causes mentioned above, but also due to a standardised test during the manufacture of the cell, consisting in short-circuiting the same without it actually exploding; the effects of this heating are greater when the material of the plastic part is polypropylene but, although less so, it also occurs with nylon used as a substitute for the former.

In order to avoid this phenomenon of re-sealing, said US Patent no. US 6,270,919 B1 proposes the creation of a plurality of separating protuberances formed on the upper surface of the plastic part which faces the lower side of the intermediate disc (where applicable) by means of the addition of material which constantly throughout the entire extension of said protuberances, increases the thickness of the plastic part on its annular base, said base being limited by the peripheral wall and the weakened area which surrounds the cylindrical core;in particular, there are three separating protuberances grouped in a circular sector spanning an angle of 120°. This is intended to achieve that the plastic part may not rest against the intermediate disc in the area of said circular sector, thus enabling an outlet passage for the gases produced in the interior of the cell.

### EXPLANATION OF THE INVENTION AND ITS ADVANTAGES

The present invention provides a safety device in hermetic seals of electrochemical cells, based on the general structure of our aforementioned EP 1 192 678 B1, which is also intended to enable an outlet for the gas in the event an undesired resealing effect arises, and which is applicable to a type of electrochemical cell which comprises a metallic container, closed at one end, inside which the active materials which constitute the anode and the cathode are separately contained, the bottom of which forms the positive contact and at whose open end there is a plug constituted by the assembly of two cylindrical parts which, from the inside outwards, are a moulded nylon plastic part and a metallic cover which constitutes the negative contact; the plastic part forms a cylindrical core, a rising peripheral wall which is also cylindrical, and between these, an annular base; the core is pierced axially by a current collector which, inserted into the anode, is in electrical contact with said cover and, adjacent to this core, there is outlined a weakened section of material which is breakable when subjected to a gas overpressure inside the metallic container; and to hold that cover, the peripheral wall of the plastic part is folded inwards, together with the edge of the open end of the metallic container, by means of a pressure exerted on the latter which ensures a hermetic seal of the metallic container; the cover is provided windows through which the gas is released after breakage of the plastic part due to the pressure of said gas inside the metallic container.

On the basis of this cell construction, the device which is the object of this invention consists in that, facing the lower surface of said cover, said plastic part has an upper surface which is provided with three channels arranged radially at 120°, formed by a reduction in the nominal and normal thickness of the material of the part which is comprised between said weakened section and said peripheral wall; this reduction is progressively greater towards the centre of the plastic part and determines a gradual reduction in the thickness of said annular base, or an increasing depth of said channels, in the direction from the peripheral wall towards the core, the smallest thickness of the annular base being slightly greater than the thickness of the weakened section.

In contrast to cited US Patent no. US 6,270,919 B1, in the device of this invention, when the plastic part flexes giving rise to re-sealing, there is no material means which acts as a separator between said upper surface of the plastic part and said lower surface of the cover. On the contrary, in this invention the gas outlet path is provided by eliminating material, with a reduction of the nominal thickness of the annular base of the plastic part carried out on the upper surface of said base, with the additional particularity that this reduction is progressively deeper towards the centre of the base, until reaching a minimum thickness very close to that of the weakened area which on breaking provides safety against the risk of explosion of the cell; this has an advantageous influence on the performance of the safety valve, and furthermore does not impose dimensional conditions on the design of the parts, which is of importance in vioew of the limited space available for the same; a design, in contrast, whose possibilities might be limited when, as occurs in said US Patent, there is an increase in thickness which logically must take up part of the limited space available above the plastic part, especially when an intermediate disc is inserted between this part and the negative contact cover. On the other hand, it should be noted that in this invention the channels which constitute the gas outlet path are uniformly distributed over the 360° of the annular base of the plastic part, which better ensures the egress of the gas, independently of the point at which the breakage of the weakened section surrounding the core commences; this varies due to the imperfect homogeneity of the sealing material, due to dimensional irregularities or due to defects in the assembly, and it is unforeseeable beforehand.

In accordance with a preferred embodiment of this invention, said channels have a rounded transversal profile and their combined linear progression is sinusoidal. This and other possible embodiments are illustrated in the detailed description below, supported by drawings.

### DRAWINGS AND REFERENCES

In order to better understand the nature of the invention, the attached drawings show variants of industrial embodiments which are merely illustrative and non limiting examples.
Figure 1 shows a preferred embodiment of the invention, wherein an electrochemical cell, shortened in length, is represented showing its upper portion in cross-section in order to appreciate the details of the proposed construction. The figure includes an enlarged detail showing in perspective the nylon plastic part (4) cut axially across the plane of the drawing, with the cylindrical core (6) removed for a better view of the sinusoidal undulations which together form the three channels (12) at 120° of the annular base (8).
Figure 2 shows the sinusoidal linear progression corresponding to the circular section indicated at II-II in the enlarged detail of Figure 1.
Figure 3 is a plan view from above of another embodiment of the plastic part (4) of the invention, wherein the sides of the channels (12) are straight and are perpendicular to a bottom which is also straight.
Figure 4 is a perspective view of the plastic part (4) shown in Figure 3.
Figure 5 is an enlarged detail of Figure 4, centred on one of the channels (12).
Figure 6 is a plan view from above, similar to that in Figure 3, which relates to an embodiment in which the sides and bottom of the channels (12) are straight, but the sides are obliquely divergent from each other.
Figure 7 is a perspective view of the plastic part (4) shown in Figure 6.
Figure 8 is a plan view of the embodiment in Figure 1 in which the cut I-I is marked as it is shown in that Figure.
Figure 9 is a perspective view of the embodiment shown in Figure 8.

The following references are indicated in these Figures:
1. Metallic container
2. Anode
3. Cathode
4. Nylon plastic part
5. Metallic cover and negative contact
6. Cylindrical core of the plastic part (4)
7. Peripheral wall of the plastic part (4)
8. Annular base of the plastic part (4)
9. Current collector
10. Weakened section in the plastic part (4)
11. Windows in the cover (5)
12. Channels in the plastic part (4)

### DESCRIPTION OF A PREFERRED EMBODIMENT

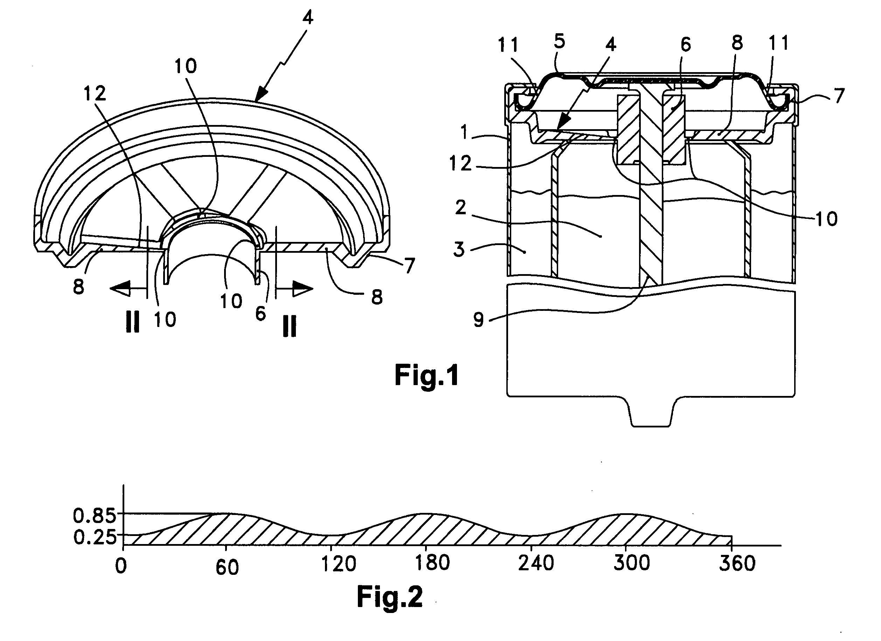

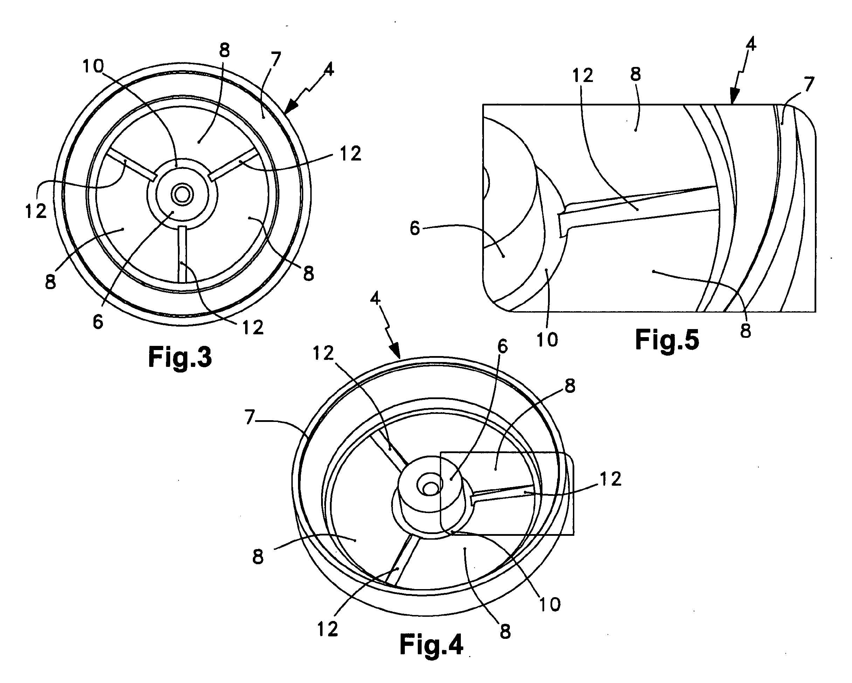

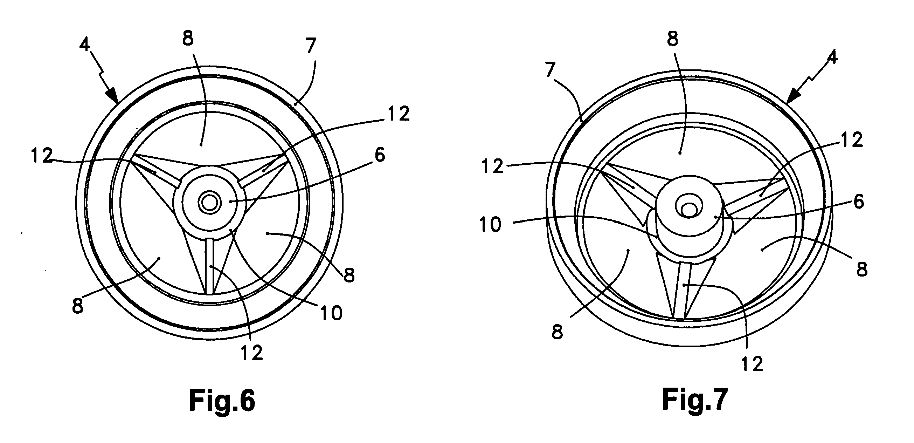

With regard to the drawings and references indicated above, illustrated in the attached drawings are preferred embodiments of the invention, which concerns a safety device for hermetic seals in electrochemical cells having a general construction which comprises a metallic container closed at one end (1), in which the active materials which constitute the anode (2) and the cathode (3) are separately contained; the base of the container forms the positive contact and its open end has a plug which is constituted of a set of two cylindrical parts which, from the inside outwards, are a moulded nylon plastic part (4) and a metallic cover (5) which constitutes the negative contact; the plastic part (4) forms a cylindrical core (6), a likewise cylindrical rising peripheral wall (7) and, between the two, an annular base (8), wherein the core (6) is pierced axially by a current collector (9) which, inserted into the anode (2), is in electrical contact with said cover (5), and wherein adjacent to this core (6) there is outlined a weakened section (10) of material which is breakable in the event of a gas overpressure inside the metallic container (1); to hold the cover (5), the peripheral wall (7) is folded inwards, together with the edge of the open end of the metallic container (1), by means of a pressure exerted on the latter which ensures a hermetic seal of the metallic container (1); said cover (5) is provided with windows (11) through which the gas is released after breakage of the plastic part (4) due to the pressure of said gas inside the metallic container (1). As may be seen in Figure 1, in the proposed device, facing the lower surface of the cover (5), the plastic part (4) has an upper surface provided with three channels (12), arranged radially at 120° and formed by a reduction in the nominal and normal thickness of the material of the part (4) which is comprised between said weakened section (10) and said peripheral wall (7); this reduction is progressively greater towards the centre of the plastic part (4) and determines a gradual reduction in the thickness of said annular base (8), or an increasing depth of said channels (12), in the direction from the peripheral wall (7) towards the core (6), the smallest thickness of the annular base (8) being slightly greater than that of the weakened section (10); furthermore, this Figure 1 shows a preferred embodiment in which said channels (12) have a rounded transversal profile, and, as shown in Figure 2, their combined linear progression is sinusoidal. Another possible embodiment in this respect is that shown in Figures 3 to 5, wherein the channels (12) have a U-shaped transversal profile, with a flat bottom and with the walls perpendicular to the bottom. A third embodiment contemplated in this invention is illustrated by means of Figures 6 and 7, and foresees that the channels (12) have a U-shaped transversal profile, with a flat bottom and with oblique and mutually divergent walls.

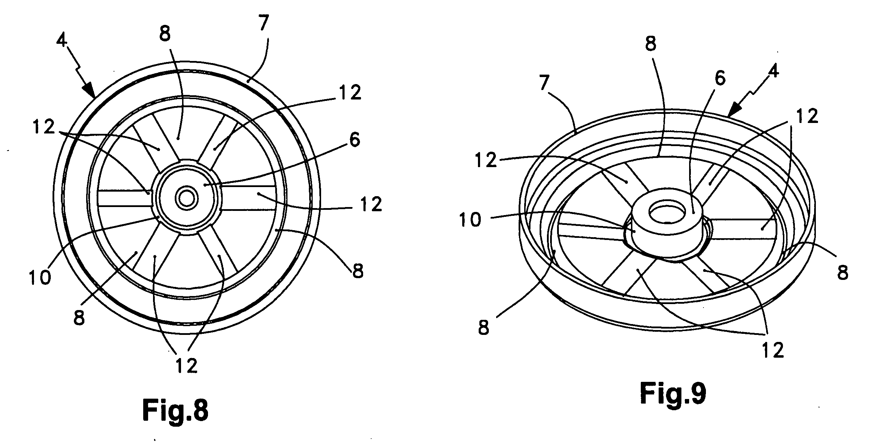

Figures 8 and 9 illustrate the first embodiment in which said plastic part (4) has an upper surface with three channels (12) whose transversal profile is rounded and whose combined linear progression is sinusoidal.

By means of the embodiments shown, it is possible to verify the particularities claimed for this invention with regard to establishing an escape path for the gas which prevents the re-sealing phenomenon by means of the reduction in the nominal thickness of the annular base (8) of the nylon plastic part (4), effected progressively from the outside inwards, until a minimum thickness is reached, this minimum thickness being only slightly greater than the thickness of the weakened section (10), whereby a number of channels (12) are generated which, whatever their shape variant may be, make it possible for the plastic part to rest completely against the cover (5), with no material interposed between the two elements, providing a safe outlet for the gas formed in the interior of the metallic container (1) of the electrochemical cell. As has been mentioned above, the design proposed herein has an advantageous influence on the valve effect entrusted to the weakened section (10); the uniform distribution of the channels all around the annular base (8) of the plastic part (4) guarantees effective operation of the device, independently of which is the location at which the breakage of said weakened section (10) commences; and the absence of protuberances of material interposed between the plastic part (4) and the metallic cover (5) makes it possible that the reduced space available in this part of the metallic container (1) does not affect adversely the possibilities of configuration of these elements.

## Claims

1. A safety device in hermetic seals in electrochemical cells, in particular for electrochemical cells having a general construction comprising a metallic container, closed at one end (1), in which the active materials which constitute the anode (2) and the cathode (3) are separately contained, which at its base forms the positive contact, and whose open end has a plug constituted by an assembly of two cylindrical parts which, from the inside outwards, are a moulded nylon plastic part (4) and a metallic cover (5) which constitutes the negative contact, said plastic part (4) forming a cylindrical core (6), a likewise cylindrical rising peripheral wall (7) and, between the two, an annular base (8), the core (6) being pierced axially by a current collector (9) which, inserted into the anode (2), is in electrical contact with said cover (5), and adjacent to this core (6) there is outlined a weakened section (10) of material which is breakable in the event of a gas overpressure in the interior of the metallic container (1), and, to hold that cover (5), the peripheral wall (7) is folded inwards, together with the edge of the open end of the metallic container (1), by means of a pressure exerted on the latter which ensures a hermetic seal of the metallic container (1), the cover (5) being provided with windows (11) through which the gas is released after breakage of the plastic part (4) due to the pressure of said gas inside the metallic container (1), **characterised in that** facing the lower surface of said cover (5), said plastic part (4) has an upper surface provided with three channels (12) arranged radially at 120° and formed by a reduction in the nominal and normal thickness of the material of the part (4) which is comprised between said weakened section (10) and said peripheral wall (7), said reduction being progressively greater towards the centre of the plastic part (4) and determining a gradual reduction in the thickness of said annular base (8), or an increasing depth of said channels (12), in the direction from the peripheral wall (7) towards the core (6), the smallest thickness of the annular base (8) being slightly greater than the thickness of the weakened section (10).

2. A safety device in hermetic seals in electrochemical cells, as claimed in claim 1, **characterised in that** said channels (12) have a rounded transversal profile and their combined linear progression is sinusoidal.

3. A safety device in hermetic seals in electrochemical cells, as claimed in claim 1, **characterised in that** said channels (12) have a U-shaped transversal profile, with a flat bottom and with the walls perpendicular to the bottom.

4. A safety device in hermetic seals in electrochemical cells, as claimed in claim 1, **characterised in that** said channels (12) have a U-shaped transversal profile, with a flat bottom and with oblique and mutually divergent walls.

## Patentansprüche

1. Sicherheitseinrichtung in hermetischen Dichtungen in elektrochemischen Zellen, insbesondere für elektrochemische Zellen mit einem allgemeinen Aufbau, der einen an einem Ende geschlossenen metallenen Behälter (1) umfasst, in dem die aktiven Materialien, die die Anode (2) und die Kathode (3) darstellen, getrennt enthalten sind, der auf seinem Grund den Pluspol bildet, und dessen offenes Ende einen Anschluss besitzt, der von einer Baueinheit aus zwei zylindrischen Teilen gebildet wird, nämlich von innen nach außen betrachtet einem geformten Nylon-Kunststoffteil (4) und einer metallenen Abdeckung (5), die den Minuspol darstellt, wobei das besagte Kunststoffteil (4) einen zylindrischen Kern (6), eine ebenfalls zylindrische aufsteigende Außenwand (7) und, zwischen den beiden, eine ringförmige Bodenplatte (8) bildet, wobei der Kern (6) axial von einem Stromabnehmer (9) durchdrungen wird, der, in Anode (2) eingesetzt, mit der besagten Abdeckung (5) elektrischen Kontakt hat, und an diesen Kern (6) anschließend befindet sich ein geschwächter Bereich (10) aus einem Material, das im Fall eines Gasüberdrucks im Inneren des metallenen Behälters (1) brechen kann, und die Außenwand (7) ist zum Halten der Abdeckung (5) zusammen mit der Kante des offenen Endes des metallenen Behälters (1) mittels eines auf letzteren ausgeübten Druckes, der ein hermetisches Abdichten des metallenen Behälters (1) gewährleistet, nach innen geknickt, wobei die Abdeckung (5) mit Fenstern (11) versehen ist, durch welche das Gas nach dem Brechen des Kunststoffteiles (4) aufgrund des Druckes dieses Gases im Inneren des metallenen Behälters (1), entlassen wird, **dadurch gekennzeichnet, dass** das besagte Kunststoffteil (4) eine obere Oberfläche besitzt, die zur unteren Oberfläche der besagten Abdeckung (5) hin ausgerichtet und mit drei Kanälen (12) versehen ist, die radial in 120°-Winkeln angeordnet sind und von einer Verringerung der Nenn- und Normalstärke des zwischen dem besagten geschwächten Bereich (10) und der besagten Außenwand (7) befindlichen Materials des Teiles (4) gebildet werden, wobei die besagte Verringerung zur Kunstoffteil(4)-Mitte hin zunehmend größer wird und eine graduelle Verringerung der Dicke der besagten ringförmigen Bodenplatte (8), oder eine zunehmende Tiefe der besagten Kanäle (12) von der Außenwand (7) ausgehend in Richtung Kern (6) bedingt, wobei die geringste Dicke der ringförmigen Bodenplatte (8) geringfügig größer als die Stärke des geschwächten Bereichs (10) ist.

2. Sicherheitseinrichtung in hermetischen Dichtungen in elektrochemischen Zellen nach Anspruch 1, **dadurch gekennzeichnet, dass** die besagten Kanäle (12) ein abgerundetes Querprofil besitzen und ihre kombinierte lineare Progression sinusförmig ist.

3. Sicherheitseinrichtung in hermetischen Dichtungen in elektrochemischen Zellen nach Anspruch 1, **dadurch gekennzeichnet, dass** die besagten Kanäle (12) ein U-förmiges Querprofil mit einem flachen Boden und mit zum Boden senkrecht verlaufenden Wänden besitzen.

4. Sicherheitseinrichtung in hermetischen Dichtungen in elektrochemischen Zellen nach Anspruch 1, **dadurch gekennzeichnet, dass** die besagten Kanäle (12) ein U-förmiges Querprofil mit einem flachen Boden und mit schrägen und zueinander divergenten Wänden besitzen.

## Revendications

1. Dispositif de sécurité dans des joints hermétiques dans des cellules électrochimiques, en particulier pour des cellules électrochimiques ayant une construction générale comprenant un conteneur (1) métallique, fermé à une extrémité, dans lequel les matériaux actifs qui constituent l'anode (2) et la cathode (3) sont contenus séparément, lequel à sa base forme le contact positif, et dont l'extrémité ouverte comporte un bouchon constitué d'un ensemble de deux parties cylindriques qui, de l'intérieur vers l'extérieur, sont une pièce (4) en plastique moulée en nylon et un couvercle (5) métallique qui constitue le contact négatif, ladite pièce (4) en plastique formant un mandrin (6) cylindrique, une paroi (7) périphérique montante également cylindrique et, entre les deux, une base (8) annulaire, le mandrin (6) étant percé en sens axial par un collecteur (9) de courant qui, inséré dans l'anode (2), est en contact électrique avec ledit couvercle (5), et adjacent à ce mandrin (6) on a esquissé une section (10) affaiblie de matériau qui peut être rompu en cas d'une surpression de gaz à l'intérieur du conteneur (1) métallique et, pour maintenir ce couvercle (5), la paroi (7) périphérique est pliée vers l'intérieur, conjointement avec le bord de l'extrémité ouverte du conteneur (1) métallique, au moyen d'une pression exercée sur ce dernier qui assure un joint hermétique du conteneur (1) métallique, le couvercle (5) étant pourvu de fenêtres (11) à travers lesquelles le gaz est libéré après brisure de la pièce (4) en plastique du fait de la pression dudit gaz à l'intérieur du conteneur (1) métallique, **caractérisé en ce qu'**en face de la surface inférieure dudit couvercle (5), ladite pièce (4) en plastique a une surface supérieure pourvue de trois canaux (12) disposés de façon radiale à 120° et formés par une réduction de l'épaisseur nominale et normale du matériau de la pièce (4) qui est comprise entre ladite section (10) affaiblie et ladite paroi (7) périphérique, ladite réduction étant progressivement plus grande en direction du centre de la pièce (4) en plastique et en déterminant une réduction progressive de l'épaisseur de ladite base (8) annulaire, ou une profondeur croissante desdits canaux (12), dans la direction de la paroi (7) périphérique vers le mandrin (6), la plus petite épaisseur de la base (8) annulaire étant légèrement supérieure à l'épaisseur de la section (10) affaiblie.

2. Dispositif de sécurité en joints hermétiques dans des cellules électrochimiques, selon la revendication 1, **caractérisé en ce que** lesdits canaux (12) ont un profil transversal arrondi et leur progression linéaire combinée est sinusoïdale.

3. Dispositif de sécurité en joints hermétiques dans des cellules électrochimiques, selon la revendication 1, **caractérisé en ce que** lesdits canaux (12) ont un profil transversal en U, avec un fond plat et avec les parois perpendiculaires au fond.

4. Dispositif de sécurité dans des joints hermétiques dans des cellules électrochimiques, selon la revendication 1, **caractérisé en ce que** lesdits canaux (12) ont un profil transversal en U, avec un fond plat et avec des parois obliques et mutuellement divergentes.
